# EUROPÄISCHE PATENTANMELDUNG

(11) **EP 1 538 381 A1**
(43) Veröffentlichungstag der Anmeldung: **08.06.2005**
(21) Anmeldenummer: 04027619.8
(22) Anmeldetag: 20.11.2004
(51) Int. Cl.: F16L 13/14

(54) **Vorrichtung zur Sicherung der Hülse eines Press-Fittings sowie Hülse für einen Press-Fitting, sowie Verfahren zur Montage eines Press-Fittings**

(30) Priorität: 05.12.2003 DE 10356898
(71) Anmelder: TECE GmbH & Co. KG, 48282 Emsdetten (DE)
(72) Erfinder: Fehlings, Thomas, 48282 Emsdetten (DE)
(74) Vertreter: Habbel, Lutz, Dipl.-Ing.

(57) **Zusammenfassung**

Die Erfindung bezieht sich auf eine Vorrichtung zur zeitlich begrenzten Sicherung einer Press-Fitting-Hülse auf einem Rohr der Sanitärinstallation, mit durch einen dem Rohr anlegbaren Bremskörper, der sich vom Rohr radial nach außen erstreckt, derart, dass er der Hülse wenigstens an einem Teil ihres Umfangs anliegt.

## Beschreibung

Die Erfindung betrifft eine Vorrichtung nach dem Oberbegriff des Anspruchs 1, eine Hülse nach dem Oberbegriff des Anspruchs 7 sowie ein Verfahren nach dem Oberbegriff des Anspruchs 9.

Aus der Praxis ist die Installation von Press-Fittings bekannt. Sie ermöglichen die schnelle und im Wesentlichen problemlose Montage von Rohren, beispielsweise Kalt- oder Warmwasserleitungen, Gasleitungen oder dergleichen in der Sanitärinstallation, beispielsweise in Form von Abzweigen, um mehrere Rohre miteinander zu verbinden, oder zum Anschluss von Rohren an andere Einrichtungen der Sanitärinstallation, wie Absperrhähne, Ventile, Wasserspeicher oder dergleichen.

Bei einer derartigen Installation, z. B. entsprechend dem Prospekt "TECEflex 1 Verbundrohr für Sanitär, Heizung und Fußbodenheizung" wird, je nach Ausgestaltung des Fittings, der Fitting beispielsweise mit einem Einsteckstutzen in das Rohrende eingesteckt. Bei der Axialtechnik, bei welcher die Hülse axial verschoben wird, ist das Rohr vorher aufgeweitet worden, um bereits aufgrund seiner Materialelastizität einen Festsitz des Fittings sicherzustellen. Zudem weist der aufgeweitete Bereich des Rohrs einen vergrößerten Außendurchmesser auf, sodass anschließend die erwähnte Hülse axial verschoben und auf diesen aufgeweiteten Rohrbereich aufgepresst werden kann, wo sich Rohr und Fitting überlappen. Der Durchmesser der Hülse ist dabei geringer bemessen als es dem Außendurchmesser des aufgeweiteten Rohrabschnittes entspricht, sodass durch das Aufpressen der Hülse eine besonders zuverlässige und dichte Verbindung zwischen dem Fitting und dem Rohr sichergestellt wird. Die für den Verpressvorgang erforderliche Presszange anzusetzen, stellt einen zeitlichen Abschnitt dar, in welchem die Kontrolle über die Hülse nur begrenzt möglich ist. Insbesondere bei größeren Rohrdurchmessern und dementsprechend großen Abmessungen sowohl des Fittings als auch der Hülse und insbesondere auch der Presszange ist es erforderlich, die Presszange mit beiden Händen zu ergreifen, sodass die lose auf dem Rohr bewegliche Hülse lediglich durch die der Hülse anliegende Zangenbacke gehalten und kontrolliert wird.

Bei diesem Stadium des Montagevorgangs ist es nicht auszuschließen, dass kurzfristig der Kontakt zwischen Hülse und Zange verloren geht. Bei horizontal verlaufenden Rohren kann dies dazu führen, dass die Hülse versehentlich in ein in der Wand verlegtes Leerrohr geschoben wird, sodass sie anschließend kaum oder nur mühsam wieder hervorgeholt werden kann, um dann endgültig montiert, also verpresst, zu werden. Insbesondere jedoch, wenn die Rohrleitungen senkrecht verlaufen, beispielsweise Steigleitungen, kann ein kurzfristig gelockerter Kontakt zwischen Zange und Hülse dazu führen, dass die Hülse eine ganze Etage tiefer fällt und nicht mehr hervorgeholt werden kann. Um eine neue Hülse auf das Rohr aufzubringen, muss der zuvor bereits in das Rohr eingesteckte Fitting demontiert werden und eine neue Hülse auf das Rohrende aufgeschoben werden. Dies ist insbesondere dann problematisch, wenn das Rohr vergleichsweise steif ist, und sein für die Fittingmontage aufgeweiteter Rohrabschnitt dem Aufschieben einer neuen Hülse erheblichen Widerstand entgegensetzt.

Der Erfindung liegt die Aufgabe zugrunde, bei der Montage eines Press-Fittings in der Sanitärinstallation eine zuverlässige Kontrolle der Hülse zu ermöglichen, bis diese endgültig verpresst und damit die Montage beendet ist.

Diese Aufgabe wird durch eine Vorrichtung mit den Merkmalen des Anspruchs 1 durch eine Hülse mit den Merkmalen des Anspruchs 7 und durch ein Verfahren mit den Verfahrensschritten des Anspruchs 9 gelöst.

Die Erfindung schlägt mit anderen Worten vor, die Hülse durch einen Bremskörper zu sichern, solange sie schiebebeweglich auf dem Rohr ist. Dies ermöglicht es, problemlos mit beiden Händen die Presszange zu bedienen, da die Hülse während dieser Zeit nicht von Hand gehalten werden muss, sondern durch den Bremskörper auf dem Rohr gesichert ist. Sollte die Zange versehentlich abrutschen, so bedeutet dies nicht den Verlust der Hülse, sondern diese wird spätestens, wenn sie an den Bremskörper gerät gehalten, sodass problemlos ein neuer Pressversuch begonnen werden kann. Insbesondere wenn unter beengten räumlichen Bedingungen gearbeitet werden muss, ist es nicht erforderlich, die Hülse bis zur endgültigen Verpressung durch eine zweite Person zu sichern, sondern es kann vielmehr ein Bremskörper mit kleinen baulichen Abmessungen verwendet werden, sodass für die Montage des Fittings und für die Handhabung der Hülse und der Presszange dem Installateur ausreichend Freiraum verbleibt, um diese Arbeiten möglichst ungehindert durchführen zu können.

Insbesondere bei der eingangs erwähnten Axialtechnik liegen die Hülsen getrennt vom übrigen Fitting vor. Da bei der Radialtechnik mit radial verpreßbaren Hülsen das Rohrende nicht aufgeweitet wird, ist die Verbindung der Hülse mit dem übrigen Fitting möglich, so daß eine freie Beweglichkeit der Hülse - und damit die Möglichkeit, die Hülse zu verlieren - in diesen Fällen nicht gegeben ist. Jedoch ist der vorliegende Vorschlag auch bei der Radialtechnik anwendbar, so daß eine Sicherung für die Hülsen geschaffen werden kann, welche möglicherweise wirtschaftlich günstiger ist als die bislang vorgesehene Verbindung mit dem übrigen Fitting, und welche auch dann wirksam ist, wenn keine Verbindung der Hülse mit dem übrigen Fitting vorgesehen sein sollte oder diese Verbindung gelöst wird.

Der Bremskörper kann beispielsweise spangenartig aus einem elastisch verformbaren Bauteil mit etwa C-förmiger oder Ω-förmiger Kontur gebildet sein, welches in Anpassung an den Rohrdurchmesser auf das Rohr aufgeklippst wird. Ein derartiger Bremskörper ist mehrfach wiederverwendbar.

Alternativ kann ein klammerartiger Bremskörper verwendet werden mit dem Vorteil, dass dieser nicht an einen bestimmten Rohrdurchmesser angepasst sein muss, sondern vielmehr durch eine Federwirkung einen möglichst geringen Abstand seiner beiden Haltebacken einzunehmen, bestrebt ist. Gegen die Federwirkung kann dieser klammerartige Bremskörper gespreizt und auf Rohre unterschiedlicher Durchmesser aufgesetzt werden. Die Federwirkung führt dann automatisch dazu, dass der Bremskörper auf dem jeweiligen Rohr gehalten wird und seinerseits ggf. die Hülse halten kann. Auch ein derartiger Bremskörper kann mehrfach wiederverwendet werden.

Vorzugsweise ist für einen guten Halt des Bremskörpers auf dem Rohr eine reibfreudig ausgestaltete Oberfläche in diesem Kontaktbereich vorgesehen und ggf. kann auch dort, wo die Hülse dem Bremskörper anliegt, eine entsprechend reibfreudige Oberfläche des Bremskörpers vorgesehen sein, sodass eine Beweglichkeit der Hülse, sobald sie dem Bremskörper anliegt, eingeschränkt wird. Hierdurch wird es erleichtert, die Hülse mit der Presszange zu erfassen und anschließend die Verpressung vorzunehmen.

In besonders einfacher und besonders wirtschaftlicher Ausgestaltung kann der Bremskörper durch einen Ring gebildet sein, beispielsweise einen Gummiring oder ähnlichen Elastomerring. Der Ring weist durch seine Elastizität die Möglichkeit auf, an mehreren Rohrdurchmessern verwendet zu werden. Bei Ausgestaltung als Elastomerring kommt hinzu, dass ein derartiger Ring die Vorteile hat, reibfreudig ausgestaltete Oberflächen aufzuweisen, die sowohl am Rohr als auch an der Hülse eine jeweils gute Bremswirkung sicherstellen.

Dabei hat sich überraschend herausgestellt, dass ein derartiger Ring größer sein kann als es dem Rohr entspricht, also einen größeren Innendurchmesser aufweisen kann als es dem Außendurchmesser des Rohrs entspricht. Durch die reibfreudige Ausgestaltung eines derartigen Elastomerrings ist sichergestellt, dass der Ring selbsttätig am Rohr in einer bestimmten Stellung hängen bleibt und nicht am Rohr unerwünschterweise entlang rutscht. Gleichfalls kann dementsprechend der Außendurchmesser des Rings geringer sein als der Innendurchmesser der Hülse. Sobald die Hülse verrutscht, stellt sie sich üblicherweise gegenüber dem Rohr leicht schräg, sodass sie keinen gleichmäßig um das Rohr herum verlaufenden Freiraum zwischen Rohr und Hülse schafft. Daher ist sichergestellt, dass die Hülse irgendwo entlang ihrem inneren Umfang dem Bremskörper, also dem Ring, anliegen wird. Hierdurch wird eine Verkantung der Hülse gegenüber dem Rohr weiter begünstigt und gleichzeitig bewirkt die Bremswirkung des Ringes, dass die Hülse sich auf dem Rohr nicht weiter verschiebt.

In besonders vorteilhafter Anwendung für den Installateur kann vorgesehen sein, die Hülse werkseitig mit dem Bremskörper zu konfektionieren, beispielsweise mit dem vorbeschriebenen Gummiring zu versehen, so daß der Installateur den Ring einfach nur von der Hülse auf das Rohr abrollt, nachdem er die Hülse auf das Rohr aufgeschoben hat.

Bei der Montage des Fittings ist erfindungsgemäß vorgesehen, dass die Hülse, bevor sie verpresst wird, am Rohr durch den Bremskörper gesichert wird, sodass, sollte ungewollt die Hülse freigegeben werden, anschließend der Bremskörper sicherstellt, dass die Hülse sich nur in einem eingegrenzten Bewegungsraum auf dem Rohr bewegen kann, nämlich bis zum Kontakt mit dem Bremskörper.

Dabei ist in besonders Zeit sparender Montageweise vorteilhaft, den Bremskörper als Ring ausgestaltet von der Hülse auf das Rohr zu streifen, wenn die Hülse selbst auf das Rohr aufgeschoben wird. Dabei kann die Hülse mit einer Hand auf das Rohr aufgeschoben werden und mit der anderen Hand kann der als Bremskörper dienende Ring von der Hülse auf das Rohr gestreift werden, sodass sich kein noch so kleiner Zeitraum ergibt, in dem die Hülse nicht entweder durch den Installateur gehalten würde oder auf dem Rohr durch den dort vorhandenen Bremskörper gesichert wäre. Zudem ergibt sich hierdurch kein zusätzliche Montagezeit beanspruchender Vorgang, wie ihn beispielsweise die separate Montage des Bremskörpers auf dem Rohr erfordern würde, sondern vielmehr wird in einer fließenden Arbeitsbewegung beim Aufstecken der Hülse auf das Rohr auch gleichzeitig der Bremskörper auf das Rohr aufgebracht.

Durch die als Ring ausgestaltete Form es Bremskörpers ist nach der Montage des Fittings dieser Bremskörper nicht mehr zerstörungsfrei vom Rohr zu lösen. Aufgrund der geringen Kosten so genannter "Gummiringe" und aufgrund der vorstehend beschriebenen Möglichkeit, einen derartigen Bremskörper ohne zusätzlich einzuplanende Arbeitszeit zu montieren, stellt dies allerdings keinen wirtschaftlichen Nachteil dar.

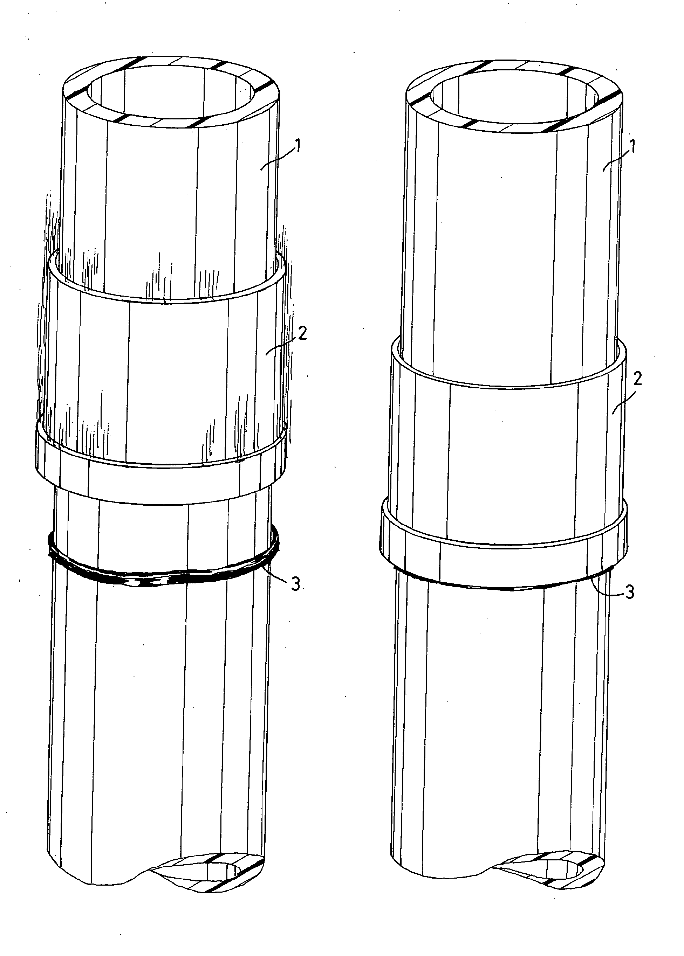

Ein Ausführungsbeispiel der Erfindung wird anhand der Zeichnung nachfolgend näher erläutert. Die Zeichnung zeigt zwei Rohre, jeweils mit aufgeschobener Hülse und auf dem Rohr befindlichem Bremskörper.

Darin ist mit 1 jeweils ein Rohr der Sanitärinstallation bezeichnet, beispielsweise eine Steigleitung für Wasser mit etwa 60 mm Außendurchmesser. Am oberen Ende dieses Rohres 1 soll - in der Zeichnung nicht dargestellt - ein Press-Fitting montiert werden. Hierzu wird zunächst eine Hülse 2 auf das Rohr 1 aufgeschoben.

Bis zum endgültigen Verpressvorgang muss die Hülse 2 sicher auf dem Rohr 1 gehalten werden.

Hierzu ist ein Bremskörper 3 in Form eines Gummirings vorgesehen. Der Bremskörper 3 liegt dem Rohr 1 zunächst nur locker an, wie am linken Rohr 1 ersichtlich, da der Innendurchmesser des Bremskörpers 3 geringfügig größer ist als der Außendurchmesser des Rohrs 1. Der Bremskörper 3 kann daher auch mit Rohren verwendet werden, die einen größeren Durchmesser aufweisen als das dargestellte Rohr 1, sodass in derartigen Fällen der Bremskörper 3 derartigen Rohren im gedehnten Zustand und dementsprechend stramm anliegen würde.

Wenn die Hülse 2 auf ihrer in der Zeichnung links dargestellten Position losgelassen wird, fällt sie nach unten bis sie gegen den Bremskörper 3 gerät und von diesem sicher gehalten wird. Da Die Hülse 2 nicht exakt konzentrisch zum Rohr 1 herabfällt, gerät sie gegen den Bremskörper 3, auch wenn dieser einen Außendurchmesser aufweist, welcher geringer ist als der Innendurchmesser der Hülse 2. Dieser Zustand ist anhand des rechten Rohres 1 dargestellt. Das obere Ende des Rohrs kann daher vom Installateur unter Benutzung beider Hände aufgeweitet werden, ohne die Hülse 2 zu verlieren. Anschließend kann der Fitting in das Rohr 1 eingesteckt, die Hülse 2 vom Bremskörper 3 entfernt, nach oben angehoben sowie schließlich mit dem Rohr und dem Fitting verpresst werden.

## Patentansprüche

1. Vorrichtung zur Sicherung einer Press-Fitting-Hülse (2) auf einem Rohr (1) der Sanitärinstallation,
**gekennzeichnet durch** einen dem Rohr (1) anlegbaren Bremskörper (3), der sich vom Rohr (1) radial nach außen erstreckt, derart, dass er der Hülse (2) wenigstens an einem Teil ihres Umfangs anliegt.

2. Vorrichtung nach Anspruch 1, **dadurch gekennzeichnet, dass** der Bremskörper (3) eine reibfreudige Oberfläche aufweist,
wobei die Oberfläche zumindest an den Kontaktbereichen reibfreudig ausgestaltet ist, mit denen der Bremskörper (3) dem Rohr (1) und / oder der Hülse (2) anliegt.

3. Vorrichtung nach Anspruch 1 oder 2, **dadurch gekennzeichnet, dass** der Bremskörper (3) klammerartig ausgestaltet ist, derart, dass er gegen eine Federwirkung spreizbar und an das Rohr (1) ansetzbar ist.

4. Vorrichtung nach Anspruch 1 oder 2, **dadurch gekennzeichnet, dass** der Bremskörper (3) als elastischer Ring - wie als Gummiring - ausgestaltet ist.

5. Vorrichtung nach Anspruch 4, **dadurch gekennzeichnet, dass** der Innendurchmesser des Rings größer ist als der Außendurchmesser des Rohrs (1).

6. Vorrichtung nach Anspruch 4 oder 5, **dadurch gekennzeichnet, dass** der Außendurchmesser des Rings kleiner ist als der Innendurchmesser der Hülse (2).

7. Hülse für einen verpressbaren Fitting der Sanitärinstallation, **gekennzeichnet durch** einen von der Hülse (2) entfernbaren und ein mit dem Fitting zu verbindenden Rohr (1)
